# EUROPÄISCHE PATENTSCHRIFT

(11) **EP 4 390 336 B1**
(45) Veröffentlichungstag und Bekanntmachung des Hinweises auf die Patenterteilung: **25.02.2026**
(21) Anmeldenummer: 23216123.2
(22) Anmeldetag: 13.12.2023
(51) Int. Cl.: G01F 11/24, B65G 53/46, G01F 25/00

(54) **VERFAHREN ZUR ÜBERWACHUNG EINES ZUSTANDES EINER VORRICHTUNG ZUM DOSIEREN BZW. SCHLEUSEN VON MATERIAL SOWIE VORRICHTUNG ZUM DOSIEREN BZW. SCHLEUSEN VON MATERIAL**
METHOD FOR MONITORING A STATE OF A DEVICE FOR METERING OR LOCKING MATERIAL AND DEVICE FOR METERING OR LOCKING MATERIAL
PROCÉDÉ DE SURVEILLANCE D'UN ÉTAT D'UN DISPOSITIF DE DOSAGE OU D'ÉCLUSAGE DE MATÉRIAU ET DISPOSITIF DE DOSAGE OU D'ÉCLUSAGE DE MATÉRIAU

(30) Priorität: 13.12.2022 AT 509542022
(43) Veröffentlichungstag der Anmeldung: 26.06.2024
(73) Patentinhaber: Scheuch Management Holding GmbH, 4971 Aurolzmünster (AT)
(72) Erfinder: Reinhold, Holger, 4676 Aistersheim (AT); Fischer, Andreas, 4910 Ried im Innkreis (AT)
(74) Vertreter: SONN Patentanwälte GmbH & Co KG

(56) Entgegenhaltungen:
- EP-A1- 1 074 492
- EP-A1- 2 415 697
- DE-A1- 102009 026 296
- GB-A- 695 382

## Beschreibung

Die Erfindung betrifft ein Verfahren zur Überwachung eines Zustandes, insbesondere eines Verschleiß- und/oder Korrosionszustandes, bei einer Vorrichtung zum Dosieren und/oder Schleusen von Material, insbesondere einer Zellenradschleuse, wobei die Vorrichtung ein feststehendes Gehäuse mit einer Eingangsseite zum Zuführen des Materials und einer Ausgangsseite zum Ausgeben von dosierten Mengen des Materials sowie eine vorzugsweise bewegliche Dosiereinheit mit einer Dosierkammer besitzt.

Des Weiteren betrifft die Erfindung eine Vorrichtung zum Dosieren und/oder Schleusen von Material, insbesondere eine Zellenradschleuse, sowie ein Reparaturverfahren für eine solche Vorrichtung.

Vorrichtungen der beschriebenen Art werden dazu eingesetzt, gehäuftes loses Material an einer Eingangsseite aufzunehmen und an einer Ausgangsseite in dosierten Mengen abzugeben. Die Aufnahme und Abgabe von Material erfolgt dabei mithilfe einer vorzugsweise beweglichen Dosiereinheit, die eine oder mehrere Dosierkammern aufweist, welche in einen gegenüber der Eingangsseite und der Ausgangsseite abgeschlossenen Zustand gebracht werden können. Ein Beispiel für eine derartige Vorrichtung sind Zellenradschleusen, die typischerweise mehrere entlang des Umfangs der Dosiereinheit angeordnete Dosierkammern aufweisen, die zwischen der Eingangsseite und der Ausgangsseite bewegt und durch die Innenwandung des feststehenden Gehäuses vorübergehend abgeschlossen werden können. Ein weiteres Beispiel für derartige Vorrichtungen sind Doppelpendelklappen oder andere Schleusenvorrichtungen.

Vorteil von derartigen Vorrichtungen ist, dass Gas- oder Wärmeübergänge zwischen der Eingangsseite und der Ausgangsseite gering gehalten werden können. Dadurch können zwei Systembereiche einer Produktions- oder Verarbeitungsanlage voneinander getrennt werden, ohne den Materialfluss einzuschränken. Darüber hinaus können die Vorrichtungen als Explosionsschutz dienen.

Nach längerem Betriebseinsatz entsteht allerdings bei den beschriebenen Vorrichtungen Verschleiß aufgrund von Abnutzungen, der zu einem erhöhten Gas- und Wärmeaustausch zwischen der Eingangsseite und der Ausgangsseite führt, weil die Dosierkammern nicht mehr hinreichend gegenüber der Eingangsseite und der Ausgangsseite abgeschlossen bzw. abgedichtet sind. Darüber hinaus kann der Verschleiß dazu führen, dass die Dosierung des Materials beeinträchtigt wird, weil Material durch den Verschleiß aus den Dosierkammern austreten kann. Bei Zellenradschleusen tritt der Verschleiß typischerweise an den radial außen liegenden Randbereichen der Wandelemente auf, die die Dosierkammern begrenzen und entlang einer Innenwandung des Gehäuses bewegt werden. Wenn der Verschleiß zu hoch ist, müssen die betroffenen Teile der Vorrichtung ausgewechselt werden. Auch Korrosion kann den Gas- und Wärmeaustausch der Vorrichtungen erhöhen und die Dosierung beeinträchtigen. Ein weiterer Nachteil, der mit dem Verschleiß und der Korrosion einhergeht, liegt darin, dass die Vorrichtung für die Verwendung als Explosionsschutz eingeschränkt ist, da Flammen an den Verschleißstellen durchschlagen können.

Ein weiteres Problem, das bei Vorrichtungen der eingangs erwähnten Art im Betrieb auftreten kann, sind anhaftende Materialanhäufungen in der Dosiereinheit, die das Volumen der Dosiereinheit reduzieren und sich ohne zusätzliche mechanische Einwirkung meist nicht mehr lösen. Derartige Materialanhäufungen werden auch als Anbackungen bezeichnet. Um den Materialdurchsatz der Vorrichtung aufrechtzuerhalten, müssen Anbackungen wieder gelöst werden.

Um den Verschleiß an einer gattungsgemäßen Vorrichtung der beschriebenen Art zu überwachen bzw. festzustellen, existieren im Stand der Technik unterschiedliche Methoden. Häufig wird die Vorrichtung im Rahmen von Wartungsarbeiten auseinandergebaut und untersucht. Die Einzelteile der Vorrichtung werden dabei optisch analysiert und Abstände manuell nachgemessen, um Verschleiß feststellen zu können. Nachteilig ist jedoch, dass ein großer Teil oder die gesamte Anlage angehalten werden muss und Facharbeiter die Vorrichtung zerlegen müssen, was sehr viel Zeit in Anspruch nimmt. Außerdem wird bei manuellen Messungen nicht jeder Verschleiß zuverlässig erkannt.

Aus der DE 10 2009 026 296 A1 ist eine Zellenradschleuse bekannt, bei der der Verschleiß mithilfe einer Einrichtung zur mechanischen Kontrolle ermittelt werden kann. Dabei wird mithilfe der Einrichtung die radiale und/oder axiale Spaltbreite zwischen den Zellenradflügeln und der Gehäuseinnenwand festgestellt. Dabei muss die Zellenradschleuse zwar nicht demontiert werden, es lässt sich jedoch der Verschleiß nur an bestimmten Stellen feststellen. Anbackungen können nur schwer oder gar nicht erkannt werden.

Die EP 2 415 697 A1 offenbart eine Fördervorrichtung, bei der Verschleiß durch Messung einer elektrischen Kapazität festgestellt werden. Nachteilig ist daran, dass zur Messung der Kapazität ein Stromkreis bzw. eine elektrische Spannung erforderlich ist, was eine Gefahr darstellen kann, wenn in der Anlage explosive Gase eingesetzt werden. Außerdem können durch kapazitive Messungen Anbackungen nur schwer oder gar nicht erkannt werden.

Werden kapazitive Sensoren eingesetzt, können diese meist nur lokale Messungen vornehmen, sodass bei der Verwendung von derartigen Sensoren nicht oder nur mit sehr großem Aufwand alle möglichen Verschleißstellen überwacht werden können.

Die ES 2 229 896 A1 offenbart eine Zellenradschleuse mit einem konisch geformten Rotor, bei der Druckluft radial auf eine stirnseitig angeordnete Deckscheibe geblasen wird, um ein Spiel bzw. Spaltmaß zwischen der Deckscheibe und dem Gehäuse zu erfassen. Das Spaltmaß kann sich aufgrund von Temperaturerhöhungen, zum Beispiel infolge von Reibung, während des Betriebs ändern. In einem Druckluftbehälter wird der Druck überwacht und Druckänderungen festgestellt, um auf das Spaltmaß zu schließen. Der Rotor kann mithilfe eines Elektromotors axial verschoben werden, um das Spaltmaß zwischen Rotorscheibe und Gehäuse auf einem vorgegebenen Wert zu halten. Mit dem Verfahren der EP 2 229 896 A1 kann zwar die Änderung des Spaltmaßes zwischen der Deckscheibe und dem Gehäuse ermittelt werden, allerdings kann kein Verschleiß oder eine Anbackung in oder an den Dosierkammern der Zellenradschleuse festgestellt oder überwacht werden, weil die Druckluft nur auf die Deckscheibe gerichtet ist.

Aus GB 695,382 A ist des Weiteren eine Zellenradschleuse bekannt, bei der zum Ausgleich von Druckunterschieden zwischen der Eingangsseite und der Ausgangsseite ein Puffergas eingebracht wird.

Im Lichte dieser Ausführungen ist es Aufgabe der vorliegenden Erfindung, die Nachteile des Standes der Technik zu lindern oder gar gänzlich zu beseitigen. Vorzugsweise ist es Aufgabe der vorliegenden Erfindung, bei einer Vorrichtung der eingangs erwähnten Art einen Verschleiß, eine Korrosion und/oder eine Anbackung in oder an einer Dosierkammer im Betrieb der Vorrichtung zuverlässig feststellen zu können. Dabei soll nicht die Sicherheit in der Anlage beeinträchtigt werden, wenn explosive Gase, Gasgemische oder Stoffe eingesetzt werden.

Gelöst wird diese Aufgabe durch ein Verfahren nach Anspruch 1, durch ein Reparaturverfahren nach Anspruch 13 und durch eine Vorrichtung nach Anspruch 14. Bevorzugte Ausführungsformen sind in den abhängigen Ansprüchen angegeben.

Gemäß Anspruch 1 ist ein Verfahren zur Überwachung eines Zustandes, insbesondere eines Verschleiß- und/oder Korrosionszustandes, bei einer Vorrichtung zum Dosieren und/oder Schleusen von Material, insbesondere einer Zellenradschleuse, vorgesehen, wobei die Vorrichtung ein feststehendes Gehäuse mit einer Eingangsseite zum Zuführen des Materials und einer Ausgangsseite zum Ausgeben von dosierten Mengen des Materials sowie eine vorzugsweise bewegliche Dosiereinheit mit einer Dosierkammer besitzt und das Verfahren folgende Schritte aufweist:
i) Überführen der Dosierkammer in einen gegenüber der Eingangsseite und der Ausgangsseite vorübergehend abgeschlossenen Zustand, wobei die Dosierkammer durch zumindest ein Wandelement der Dosiereinheit begrenzt wird und in dem vorübergehend abgeschlossenen Zustand vorzugsweise durch eine Innenwandung des Gehäuses abgeschlossen wird;
ii) Einleiten eines Fluids, insbesondere eines Gases, in die im abgeschlossenen Zustand befindliche Dosierkammer mit Hilfe einer Druckerzeugungseinheit, um den Druck in der Dosierkammer zu erhöhen;
iii) Messen des Drucks in der Dosierkammer mit einer Druckmesseinheit; und
iv) Bestimmen des Zustandes der Vorrichtung auf Basis des gemessenen Drucks, insbesondere auf Basis eines Druckverlaufs.

Mit dem erfindungsgemäßen Verfahren kann ein Zustand der Vorrichtung bestimmt werden, um Kenntnis darüber zu erlangen, ob Reparatur oder Instandsetzungsarbeiten an der Vorrichtung erforderlich sind. Der Zustand kann ein Verschleiß-, Korrosions und/oder Anbackungszustand sein. Insbesondere kann ein Verschleiß, d.h. eine Abnutzung von Teilen, an oder in der Dosierkammer auf Basis des eingebrachten Fluids bestimmt werden, wenn dieses in dem abgeschlossenen Zustand aus der Dosierkammer entweicht. Dies deshalb, weil das eingebrachte Fluid schneller aus der Dosierkammer entweicht und somit nur ein entsprechend verringerter Druck in der Dosierkammer aufgebaut werden kann, wenn der Verschleiß an oder in der Dosierkammer hoch ist und dementsprechend größere Spaltmaße zwischen den bewegten Teilen der Vorrichtung vorliegen. Da der Verschleiß mithilfe des entweichenden Fluids bestimmt wird, kann nicht nur Verschleiß an bestimmten Stellen der Dosierkammer festgestellt werden, wie das bei den lokalen Messmethoden aus dem Stand der Technik bekannt ist, sondern es kann jede Art von Verschleiß erkannt werden, der dazu führt, dass das Fluid aus der Dosierkammer entweicht. Mit dem erfindungsgemäßen Verfahren ist es in gleicher Weise auch möglich, Korrosion zu erkennen, wenn die Korrosion die Spaltmaße erhöht und dies auch zu einer erhöhten Entweichung des Fluids aus der Dosierkammer führt. Die folgenden Ausführungen betreffen hauptsächlich die Erkennung von Verschleiß, sind aber aufgrund der ähnlichen Folgen und Wirkungen auch auf die Erkennung von Korrosion übertragbar. Neben Verschleiß und Korrosion können mit dem erfindungsgemäßen Verfahren auch Anbackungen in der Dosierkammer erkannt werden, da durch die Anbackung der Druck in der Dosierkammer erhöht wird. Die Erkennung von Verschleiß, Korrosion und Anbackungen können unter der Bestimmung eines Zustandes der Vorrichtung zusammengefasst werden. Bei dem Zustand kann es sich demnach um einen Verschleißzustand, einen Korrosionszustand und/oder einen Anbackungszustand handeln. Eine Anbackung ist eine anhaftende Materialanhäufung in der Dosiereinheit, die das effektive Volumen einer Dosierkammer verringert und dadurch den Materialdurchsatz verringert. Vorteilhafterweise ist aufgrund der Bestimmung des Zustands auf Basis des eingebrachten Fluids keine offene elektrische Spannung innerhalb der Vorrichtung erforderlich, sodass bei der Verwendung von explosiven Prozessgasen oder Gasgemischen die Explosionsgefahr durch das erfindungsgemäße Verfahren nicht erhöht wird. Die Dosiereinheit ist innerhalb des feststehenden Gehäuses angeordnet und vorzugsweise relativ zu diesem beweglich, insbesondere um eine Achse drehbar. Die Dosiereinheit kann von einem elektrischen Antrieb direkt oder indirekt, beispielsweise über ein Getriebe oder einen Riemen, angetrieben werden. An der Eingangsseite weist das Gehäuse eine Eingangsöffnung auf, durch welche das Material zu der Dosiereinheit gelangt und in die Dosierkammer aufgenommen werden kann. Mit der Dosierkammer wird das Material von der Eingangsseite zur Ausgangsseite befördert. An der Ausgangsseite weist das Gehäuse eine Ausgangsöffnung auf, durch welche das dosierte Material austreten kann. Über die Eingangsöffnung und die Ausgangsöffnung kann die Vorrichtung in eine Anlage eingefügt werden. Die Anlage kann beispielsweise eine Anlage zur Zementklinkerherstellung oder eine (Sub-)Anlage davon zur Staubabscheidung, insbesondere eine Schlauchfilter-Anlage, sein. Bei dem Material, das an der Eingangsseite zugeführt wird, kann es sich beispielsweise um pulverförmiges Material wie Staub, insbesondere Klinkerstaub, handeln. Durch die Vorrichtung wird der Staub aus der Anlage nach außen getragen. Zwischen der Eingangsseite und der Ausgangsseite besitzt das Gehäuse bei einer Ausführungsform einen Innenraum, in welchem die Dosiereinheit aufgenommen ist. Die Dosierkammer ist im abgeschlossenen Zustand durch zumindest ein Wandelement der Dosiereinheit begrenzt und dazu eingerichtet, das Material an der Eingangsseite aufzunehmen und an der Ausgangsseite dosiert wieder abzugeben. Die Dosierung hängt vom Volumen der Dosierkammer ab. Der abgeschlossene Zustand der Dosierkammer kann auch als abgeschlossene Stellung der Dosierkammer bezeichnet werden. Das zumindest eine Wandelement kann an einer zentralen Nabe oder einer zentralen Achse der Dosiereinheit befestigt sein. Die Dosiereinheit kann gemäß einer besonders bevorzugten Ausführungsform mehrere gleichartige Dosierkammern aufweisen, die vorzugsweise alle ein gleiches Volumen besitzen und entlang des Umfangs der Dosiereinheit angeordnet sind. Es ist aber auch möglich, dass nur eine einzige Dosierkammer vorhanden ist. Eine Dosierkammer kann durch mehrere, insbesondere voneinander beabstandete, Wandelemente der Dosiereinheit begrenzt sein. Bei einer besonders bevorzugten Ausführungsform weist die Dosiereinheit mehrere sich axial und radial zu einer Drehachse der Dosiereinheit erstreckende Wandelemente auf, zwischen denen jeweils eine Dosierkammer ausgebildet ist. Die Wandelemente können im Querschnitt betrachtet in regelmäßigen Abständen entlang des Umfangs der Dosiereinheit angeordnet sein und dazwischen die Dosierkammern ausbilden. An den gegenüberliegenden Stirnseiten der Dosiereinheit kann jeweils eine Deckscheibe montiert sein, die mit den Wandelementen verbunden ist und ebenfalls die Dosierkammern begrenzt. In dem vorübergehend gegenüber der Eingangsseite und der Ausgangsseite abgeschlossenen Zustand der Dosierkammer wird die Aufnahme und Abgabe von Material verhindert. Die Dosierkammer kann hierzu durch eine mechanische Blockade, die das Eindringen von Material in die Dosierkammer und das Austreten aus der Dosierkammer verhindert, gegenüber der Eingangsseite und der Ausgangsseite abgeschlossen werden. Die Dosierkammer kann insbesondere dadurch vorübergehend abgeschlossen werden, dass ein dem Gehäuse zugewandter außen liegender Randbereich des zumindest einen die Dosierkammer ausbildenden Wandelements entlang einer Innenwandung des Gehäuses gleitet, sodass ein vorübergehend geschlossener Innenraum in der Dosierkammer entsteht. Die Dosierkammer wird in einem Ausführungsbeispiel in dem abgeschlossenen Zustand durch das zumindest eine Wandelement, die Innenwandung und gegebenenfalls durch die Deckscheiben begrenzt. Wenn kein Verschleiß vorliegt, ist die Dosierkammer in dem abgeschlossenen Zustand bevorzugt auch gegenüber Gasen im Wesentlichen abgedichtet, sodass kein oder nur vernachlässigbar wenig Gas von der Eingangsseite zur Ausgangsseite oder vice versa gelangt. Zu diesem Zweck kann das zumindest eine Wandelement mit der Innenwandung in Berührung stehen oder ein Spalt von höchstens 1 mm zwischen der Innenwandung und dem zumindest einen Wandelement vorliegen. Bevorzugt liegt ein Spalt vor, der zwischen 0,1 mm und 0,9 mm oder zwischen 0,2 mm und 0,9 mm oder zwischen 0,2 mm und 0,7 mm beträgt.

Wenn allerdings ein Verschleiß oder Korrosion in oder an der Dosierkammer, insbesondere an dem außenliegenden Randbereich des zumindest einen Wandelements vorliegt, kann es vorkommen, dass größere Mengen an Gas oder Material von der Eingangsseite zur Ausgangsseite gelangen. Verschleiß liegt dann vor, wenn ein Abstand oder ein Spiel zwischen zueinander beweglichen Teilen, insbesondere des zumindest einen Wandelements und der Innwandung des Gehäuses, aufgrund von Abnutzung größer ist als ursprünglich bei der Verwendung von nicht verschlissenen Teilen vorgesehen. Korrosion kann ebenfalls zu einem vergrößerten Abstand oder Spiel führen. Die Dosierkammer im abgeschlossenen Zustand, die einen Verschleiß oder Korrosion aufweist, wird aufgrund des Zweckes des Zustandes in dieser Offenbarung weiterhin als "abgeschlossen" bezeichnet, auch wenn nun mehr Gas von der Eingangsseite zur Ausgangsseite gelangt, als dies ohne Verschleiß oder Korrosion der Fall wäre. Im Folgenden wird die Bestimmung des Zustandes der Vorrichtung näher beschrieben. In Schritt i) wird die Dosierkammer in den gegenüber der Eingangsseite und der Ausgangsseite vorübergehend abgeschlossenen Zustand gebracht. In Schritt ii) wird ein Fluid, vorzugsweise ein Gas, in die im abgeschlossenen Zustand befindliche Dosierkammer geleitet. Das Fluid kann zeitlich konstant mit im Wesentlichen konstantem Druck eingeleitet werden. Alternativ kann auch eine impulsförmige Einleitung des Fluids vorgesehen sein. Als Fluid kann beispielsweise Druckluft oder Stickstoff verwendet werden. Das Fluid wird unter Druck eingeleitet. Ein Versorgungsdruck der Druckversorgungseinheit kann bei einer Ausführungsform der Erfindung zwischen 1,5 und 7 bar liegen. Durch Einleiten des Fluids wird der Druck in der Dosierkammer erhöht. In einer ideal abgedichteten Dosierkammer könnte der Druck innerhalb der Dosierkammer bis zum Versorgungsdruck zunehmen. Aufgrund des Verschleißes, der Korrosion oder eines vorgesehenen Spiels zwischen zueinander beweglichen Teilen wird dies im Betrieb der Vorrichtung nicht oder nur selten der Fall sein. In Schritt iii) wird der Druck in der Dosierkammer in dem abgeschlossenen Zustand gemessen. Die Messung des Druckes kann gleichzeitig mit dem Einleiten des Fluids oder nach Beginn des Einleitens des Fluids erfolgen. Wenn Verschleiß oder Korrosion an oder in der Dosierkammer, insbesondere an dem zumindest einem Wandelement, vorliegt, kann das Fluid (vermehrt) aus der Dosierkammer in dem abgeschlossenen Zustand entweichen, weshalb der Druck in der Dosierkammer ein Maß für den Verschleiß darstellt. Wenn Anbackungen vorliegen, wird dadurch der Druck in der Dosierkammer im Vergleich zu einer Dosierkammer ohne Anbackungen erhöht, weil das Volumen effektiv reduziert ist und das Fluid schwerer entweichen kann. Auf Basis des gemessenen Drucks kann daher der Zustand in Schritt iv) bestimmt werden. Je niedriger der gemessene Druck im Vergleich zum Versorgungsdruck der Druckerzeugungseinheit innerhalb der Dosierkammer im abgeschlossenen Zustand ist, desto höher ist der Verschleiß oder die Korrosion. Wenn der Druck hoch ist, ist dies ein Hinweis auf Anbackungen. Ob ein Druck zu hoch oder zu niedrig ist, bezieht sich auf den Druck einer Dosierkammer im idealen Zustand, also einem Zustand ohne Verschleiß, Korrosion und Anbackungen. Der gemessene Druck ist daher ein Maß für den Zustand, insbesondere den Verschleiß, die Korrosion und/oder Anbackungen. Der gemessene Druck kann beispielsweise einer Verschleißskala, Korrosionsskala oder Anbackungsskala zugeordnet werden. Wenn der Verschleiß, die Korrosion oder die Anbackung einen bestimmten Wert überschreitet, kann vorgesehen sein, Verschleißteile, insbesondere das zumindest eine Wandelement, auszutauschen oder Anbackungen zu entfernen. Bei der Druckerzeugungseinheit kann es sich beispielsweise um eine Fluidspeichervorrichtung, die unter Druck gesetztes Fluid speichern kann, und/oder um eine Pumpvorrichtung, die Fluid unter Druck setzen kann, handeln. Die Fluidspeichervorrichtung bzw. Pumpvorrichtung können mit der Dosiereinheit verbunden sein. Allgemein ist die Druckerzeugungseinheit dazu eingerichtet, unter Druck stehendes Fluid bereitzustellen. Wie bereits erwähnt, liegt der Verschleiß oder die Korrosion typischerweise an dem zumindest einen Wandelement vor, weshalb dieses getauscht werden kann, wenn der Verschleiß oder die Korrosion zu hoch ist. Bei einer besonders bevorzugten Ausführungsform wird der Zustand, insbesondere der Verschleiß, die Korrosion oder Anbackungen, anhand eines gemessenen zeitlichen Druckverlaufs bestimmt. Der zeitliche Druckverlauf setzt sich aus gemessenen Druckwerten zusammen. Auf Basis des Druckverlaufs kann auch eine Frequenz, insbesondere eine Rotationsfrequenz im Falle einer Zellenradschleuse als Vorrichtung, bestimmt werden. Die Bestimmung des Zustands anhand eines Druckverlaufs ist besonders zuverlässig. Der Zustand der Vorrichtung kann insbesondere anhand eines Mittelwerts und/oder anhand einer Amplitude des Druckverlaufs bestimmt werden. Der Zustand kann aber auch auf Basis des Druckanstiegs und/oder des Druckabfalls im Druckverlauf bestimmt werden. Vorteilhafterweise kann bei Verwendung eines zeitlichen Druckverlaufs der Verschleiß, die Korrosion und/oder die Anbackung in oder an mehreren Dosierkammern auf besonders einfache Weise überwacht werden. Kleine Mittelwerte und kleine Amplituden des Druckverlaufs weisen auf hohen Verschleiß/Korrosion und geringe Anbackungen einer Dosierkammer hin. Hohe Mittelwerte und hohe Amplituden weisen auf geringen Verschleiß/Korrosion und viele Anbackungen hin. Der Druck des Druckverlaufs kann bei einer Ausführungsform einer Bewertungsskala für den Zustand zugeordnet werden. Wenn der Druck, insbesondere der Mittelwert, eine Amplitude, ein Druckabfall oder ein Druckaufbau, des Druckverlaufs eine zuvor festgelegte Untergrenze unterschreitet, kann vorgesehen sein, dass ein Signal zum Austausch von Verschleißteilen ausgegeben wird. Wenn der Druck, insbesondere der Mittelwert, eine Amplitude, ein Druckabfall oder ein Druckaufbau, des Druckverlaufs eine zuvor festgelegte Obergrenze überschreitet, kann vorgesehen sein, dass ein Signal zum Entfernen von Anbackungen ausgegeben wird. Die Schritte des erfindungsgemäßen Verfahrens können in der angegebenen Reihenfolge oder zumindest teilweise überlappend ausgeführt werden. Beispielsweise können die Schritte ii) und iii) gleichzeitig ausgeführt werden. Bei der Vorrichtung kann es sich beispielsweise um eine Zellenradschleuse oder eine Doppelpendelklappe handeln. Eine Doppelpendelklappe besitzt zwei Klappen, die nacheinander geöffnet und geschlossen werden, um einen Gasaustausch von der Eingangs- zur Ausgangsseite und vice versa zu vermeiden. Die Klappen können auslösen, wenn ein bestimmtes Gewicht auf ihnen lastet. Die Doppelpendelklappe kann mechanisch, elektrisch, hydraulisch und/oder pneumatisch aktuiert werden. Bei einer Ausführungsform der Erfindung kann das erfindungsgemäße Verfahren zur Überwachung eines Zustandes während des Betriebs der Vorrichtung, d.h. während Material von der Eingangsseite zu der Ausgangsseite gefördert wird, durchgeführt werden. Das Verfahren kann jedoch auch durchgeführt werden, wenn kein Material von der Eingangsseite zu der Ausgangsseite gefördert wird.

Richtungsangaben und Orientierungen in dieser Offenbarung beziehen sich auf den bestimmungsgemäßen Gebrauchszustand der Vorrichtung. Beispielsweise kann bei einem nicht einschränkenden Beispiel die Eingangsseite oben, die Ausgangsseite unten sein.

Bei einer bevorzugten Ausführungsform ist vorgesehen, dass die Dosierkammer zwischen der Eingangsseite und der Ausgangsseite bewegt wird.

Um den Zustand zuverlässig bestimmen zu können, kann das Fluid in die Dosierkammer eingeleitet und der Druck gemessen werden, wenn die Dosierkammer im Wesentlichen frei von Material ist. Im Wesentlichen frei von Material bedeutet, dass sich kein loses Material mehr in der Dosierkammer befindet. Anbackungen können jedoch in der Dosierkammer vorhanden sein, die allerdings kein loses Material, wie zum Beispiel losen Staub, (mehr) darstellen. Dadurch werden Verschleißstellen nicht durch das Material verdeckt und Anbackungen können zuverlässiger erkannt werden. Außerdem wird das Material und dessen Ausgabe an der Ausgangsseite nicht durch die unter Druck gesetzte Dosierkammer, insbesondere beim Austritt aus der Vorrichtung, negativ beeinflusst.

Bevorzugt ist, wenn das Fluid in die Dosierkammer eingeleitet und der Druck gemessen wird, während die Dosierkammer von der Ausgangsseite in Richtung der Eingangsseite bewegt wird. Insbesondere bei Zellenradschleusen ist die Dosierkammer typischerweise leer, d.h. sie weist kein Material auf, wenn sie von der Ausgangsseite in Richtung der Eingangsseite bewegt wird.

Das Fluid kann in mehreren Impulsen oder mit einem einzigen Einlassstoß in die Dosierkammer eingeleitet werden. Der Druck, mit dem das Fluid in die Dosierkammer geleitet wird, d.h. der Versorgungsdruck, liegt bevorzugt zwischen 1,5 bar und 7 bar, insbesondere zwischen 2 bar und 6 bar. Die Impulse besitzen jeweils einen Anfang und ein Ende. Durch den Einlassstoß wird das Fluid im Wesentlichen kontinuierlich, beispielsweise über einen Zeitraum von 30 Sekunden bis 5 Minuten, in die Dosierkammer mit konstantem Druck eingeleitet. Der Vorgang kann mehrmals wiederholt werden, um den Zustand regelmäßig zu überwachen. Dabei kann zum Beispiel eine Trendanalyse über mehrere Tage oder Wochen erstellt werden.

Eine besonders einfache Ausgestaltung ergibt sich, wenn die Dosiereinheit ein Zellenrad ist, an welchem mehrere Wandelemente angeordnet sind. Eine Vorrichtung mit einem solchen Zellenrad kann auch als Zellenradschleuse bezeichnet werden. Das Zellenrad ist ein Rotor, der gegenüber dem Gehäuse, das den Stator bildet, drehbar ist. Das Zellenrad wird durch einen elektrischen Antrieb angetrieben. Das Zellenrad kann eine Achse oder eine Nabe aufweisen, von der mehrere sich insbesondere axial erstreckende Wandelemente radial abstehen. Die Nabe oder die Achse kann mit dem Antrieb direkt oder indirekt verbunden sein. An den Stirnseiten des Zellenrads kann jeweils eine Deckscheibe angeordnet sein, die mit den Wandelementen in Verbindung steht. Im Querschnitt betrachtet sind die Wandelemente bevorzugt regelmäßig zueinander beabstandet. Zwischen den Wandelementen wird jeweils eine Dosierkammer ausgebildet. Ein Zellenrad kann beispielsweise 2, 3, 4, 5, 6, 7, 8 oder mehr Dosierkammern aufweisen. Die Dosierkammern besitzen vorzugsweise alle das gleiche Volumen. Da ein Zellenrad mehrere Dosierkammern aufweist, ist es hinsichtlich der Überwachung des Zustandes günstig, wenn ein Druckverlauf bestimmt wird. Zu diesem Zweck kann das Fluid kontinuierlich über einen Zeitraum, beispielsweise 1 Minute, eingeleitet wird, während die Dosierkammern an dem Einlass der Druckerzeugungseinheit vorbei bewegt werden. Der Druckverlauf wird durch laufende Messungen des Drucks bestimmt. Auf Basis des Druckverlaufs, insbesondere eines Mittelwerts, einer Amplitude, eines Druckaufbaus und/oder eines Druckabfalls des Druckverlaufs, kann der Zustand bestimmt werden. Wenn die Dosiereinheit mehrere Dosierkammern aufweist, wie dies bei Zellenrädern der Fall ist, ist der Druckverlauf in Perioden unterteilbar. Jede Periode kann aufgrund der Kenntnis zu jeder Zeit über den Drehwinkel der Dosiereinheit einer Dosierkammer zugeordnet werden. Von jeder Periode kann der Mittelwert, die Amplitude, der Druckaufbau und/oder der Druckabfall bestimmt werden. Dadurch kann der Verschleiß, die Korrosion und/oder eine Anbackung jeder vorbeibewegten Dosierkammer einzeln bestimmt werden.

Eine besonders einfache Ausgestaltung der Erfindung ergibt sich, wenn der Druck ein Differenzdruck zwischen einem Innenraum der Dosierkammer und der Umgebung außerhalb der Vorrichtung ist. Der Druck außerhalb der Vorrichtung ist auch ein Druck außerhalb einer allfälligen Anlage, in welche die Vorrichtung eingebaut ist oder mit welcher die Vorrichtung verbunden ist. Der Druck in der Umgebung außerhalb der Vorrichtung beträgt im Wesentlichen 1 bar.

Bei einer alternativen Ausführung ist vorgesehen, dass der Druck ein Differenzdruck zwischen einem Innenraum der Dosierkammer und einem an die Eingangsseite oder an die Ausgangsseite angeschlossenen Systembereich einer Anlage ist. Der Druck im Systembereich an der Ausgangsseite oder an der Eingangsseite hängt vom jeweiligen in der Anlage durchgeführten Verfahren ab. Es kann sich um einen Unterdruck zur Umgebung handeln.

Bevorzugt ist, wenn das Fluid über einen an einer Innenwandung des Gehäuses angeordneten Einlass der Druckerzeugungseinheit in die Dosierkammer eingebracht wird. Insbesondere bei Zellenradschleusen ergibt sich dadurch der Vorteil, dass in vorbeigleitende Dosierkammern ("Zellen") auf einfache Weise das Fluid eingeleitet werden kann, da die Dosierkammern bei Zellenradschleusen im abgeschlossenen Zustand durch die Innenwandung des Gehäuses begrenzt werden. Der Einlass kann bündig mit der Innenwandung des Gehäuses abschließen, d.h. nicht über die Innenwandung hinaus in die Dosierkammer hineinragen, oder in die Innenwandung hineinversetzt sein. Der Einlass ragt jedenfalls nicht über die Innenwandung hinaus in das Innere des Gehäuses hinein.

Bevorzugt ist daher auch, wenn der Druck in der Dosierkammer mit einem an einer Innenwandung des Gehäuses angeordneten Messfühler der Druckmesseinheit gemessen wird. Der Messfühler kann ebenfalls bündig mit der Innenwandung des Gehäuses abschließen oder in die Innenwandung hinein versetzt sein, sodass der Messfühler nicht über die Innenwandung hinaus in das Innere des Gehäuses hineinragt. Als Messfühler kann beispielsweise ein Drucksensor, insbesondere ein Differenzdrucksensor, eingesetzt werden. Bevorzugt sind der Messfühler und der Einlass getrennt voneinander angeordnet. Bei einer Ausführungsform kann vorgesehen sein, dass der Messfühler am Einlass angeordnet ist.

Der Einlass und der Messfühler können auf einer gemeinsamen Ebene quer zu einer Bewegungsrichtung der Dosierkammer oder in Richtung der Bewegungsrichtung versetzt zueinander angeordnet sein. Die Bewegungsrichtung wird durch die Bewegung der Dosierkammer zwischen der Eingangsseite und der Ausgangsseite festgelegt. Die Bewegungsrichtung kann insbesondere eine Drehrichtung sein. In einer bevorzugten Ausführungsform ist die Eingangsseite oberhalb der Ausgangsseite angeordnet, sodass das Material durch die Schwerkraft zu der Dosiereinheit gelangt und an der Ausgangsseite austreten kann. Bei dieser Ausführungsform können der Einlass und der Messfühler auf einer gemeinsamen horizontalen Ebene oder in vertikale Richtung versetzt zueinander angeordnet sein. Wenn der Einlass und der Messfühler auf einer gemeinsamen Ebene quer zur Bewegungsrichtung, insbesondere in einer gemeinsamen horizontalen Ebene, angeordnet sind, kann das Fluid in die Dosierkammer eingeleitet werden und gleichzeitig der Druck gemessen werden. Bevorzugt wird hierbei der Verschleiß anhand des Druckaufbaus im Druckverlauf bestimmt. Wenn der Einlass und der Messfühler in Richtung der Bewegungsrichtung versetzt zueinander angeordnet sind, kann über den Einlass das Fluid in die Dosierkammer eingeleitet werden und mit der Messung des Drucks zu einem späteren Zeitpunkt begonnen werden, sodass das Fluid über einen längeren Zeitraum aus der Dosierkammer austreten kann und dieser Austritt durch den Messfühler erfasst werden kann. Bevorzugt wird hierbei der Verschleiß anhand des Druckabfalls im Druckverlauf bestimmt. Der Einlass und der Messfühler können in einer gemeinsamen vertikalen Ebene angeordnet sein. Es kann aber auch vorgesehen sein, dass der Einlass und der Messfühler jeweils in einer vertikalen Ebene angeordnet sind, die parallel zueinander verlaufen.

Die Erfindung betrifft auch ein Reparaturverfahren zum Reparieren einer Vorrichtung zum Dosieren und/oder Schleusen von Material, insbesondere einer Zellenradschleuse, wobei die Vorrichtung ein feststehendes Gehäuse mit einer Eingangsseite zum Zuführen des Materials und einer Ausgangsseite zum Ausgeben von dosierten Mengen des Materials sowie eine vorzugsweise bewegliche Dosiereinheit mit einer Dosierkammer besitzt, wobei die Dosiereinheit zumindest ein Wandelement besitzt und das Verfahren folgende Schritte aufweist:
a) Ausführen eines Verfahrens zur Überwachung eines Zustands, insbesondere von Verschleiß oder Korrosion, der oben beschriebenen Art; und
b) Auswechseln oder Reparieren des zumindest einen Wandelements, wenn der Zustand von einem Sollzustand abweicht, insbesondere wenn ein Verschleiß und/oder eine Korrosion ein vorgegebenes Maß übersteigt; oder
c) Entfernen von Anbackungen, wenn der Zustand von einem Sollzustand abweicht, insbesondere wenn die Menge von Anbackungen ein vorgegebenes Maß übersteigt.

Der gemessene Druck in der Dosierkammer stellt, wie oben bereits beschrieben, aufgrund des entweichenden Fluids ein Maß für den Verschleiß, die Korrosion oder Anbackungen dar. Je niedriger der gemessene Druck ist, desto höher ist der Verschleiß oder die Korrosion. Typischerweise verschleißt bei den oben beschriebenen Vorrichtungen zum Dosieren und/oder Schleusen von Material das zumindest eine Wandelement, sodass dieses für den Fluidaustritt verantwortlich ist und ausgewechselt werden muss. Mit dem Reparaturverfahren kann die Vorrichtung zum Dosieren und/oder Schleusen von Material wieder instandgesetzt werden, wenn der Verschleiß oder die Korrosion zu groß ist. Insbesondere kann das zumindest eine Wandelement ersetzt oder repariert werden. Bei einer Vorrichtung zum Dosieren und/oder Schleusen von Material kann das zumindest eine Wandelement oder ein Teil davon auswechselbar ausgebildet sein. Beispielsweise kann das zumindest eine Wandelement ein Halteteil und eine daran lösbar befestigte Verschleißplatte aufweisen. Wenn mehrere Wandelemente vorgesehen sind, können alle jeweils ein Halteteil und eine daran lösbar befestigte Verschleißplatte aufweisen. Eine nicht verschlissene oder nicht korrodierte Verschleißplatte kann mit der Innenwandung in Berührung stehen oder es kann ein Spalt von höchstens 1 mm zwischen der Verschleißplatte und der Innenwandung vorliegen. Bevorzugt ist der Spalt zwischen 0,1 mm und 0,9 mm oder zwischen 0,2 mm und 0,9 mm oder zwischen 0,2 mm und 0,7 mm groß. Die Verschleißplatte kann mit dem Halteteil zum Beispiel mithilfe von Schrauben befestigt sein. Die Verschleißplatte ist vorzugsweise an einem radial außenliegenden Randbereich des Halteteils angeordnet. Der Sollzustand ist ein Zustand der Vorrichtung, bei der noch kein Reparatur- oder Instandsetzungsbedarf vorliegt.

Die Erfindung betrifft auch eine Vorrichtung zum Dosieren und/oder Schleusen von Material, insbesondere eine Zellenradschleuse, aufweisend:
ein feststehendes Gehäuse mit einer Eingangsseite zum Zuführen des Materials und einer Ausgangsseite zum Ausgeben von dosierten Mengen des Materials;
eine vorzugsweise bewegliche Dosiereinheit mit einer Dosierkammer, mit der loses Material von der Eingangsseite aufgenommen und in dosierter Menge an der Ausgangsseite abgegeben werden kann, wobei die Dosierkammer in einen gegenüber der Eingangsseite und der Ausgangsseite vorübergehend abgeschlossenen Zustand überführbar ist, wobei die Dosierkammer durch zumindest ein Wandelement der Dosiereinheit begrenzt ist und die Dosierkammer im abgeschlossenen Zustand vorzugsweise durch eine Innenwandung des Gehäuses vorübergehend abgeschlossen ist; und
eine Antriebseinheit, die mit der Dosiereinheit mechanisch verbunden ist, um die Dosiereinheit in Bewegung zu versetzen;
eine Druckerzeugungseinheit, die dazu eingerichtet ist, einen Druck in der abgeschlossenen Dosierkammer zu erzeugen, und
eine Druckmesseinheit zum Messen des Drucks innerhalb der Dosierkammer, um einen Zustand, insbesondere einen Verschleiß- und/oder einen Korrosionszustand, der Vorrichtung festzustellen.

Die Vorteile und Merkmale, die in Zusammenhang mit dem Verfahren zur Überwachung von Verschleiß beschrieben wurden, sind auch auf die erfindungsgemäße Vorrichtung zum Dosieren und/oder Schleusen von Material übertragbar. Der Antrieb kann insbesondere elektrisch sein. Die Druckerzeugungseinheit kann mit einer Fluidversorgung verbunden sein. Die Fluidversorgung kann beispielsweise durch eine Gasflasche oder einen Kompressor gebildet sein. Die Vorrichtung kann beispielsweise eine Zellenradschleuse oder eine Doppelpendelklappe sein. Die Antriebseinheit kann beispielsweise eine elektrische, pneumatische und/oder hydraulische Antriebseinheit sein.

Bevorzugt ist, wenn das zumindest eine Wandelement an einem im Betrieb einer Innenwandung des Gehäuses zugewandten Randbereich eine lösbar befestigte Verschleißplatte aufweist. Dadurch muss nicht das gesamte Wandelement ausgewechselt werden bei Verschleiß oder Korrosion, sondern es genügt, die Verschleißplatte auszutauschen. Das zumindest eine Wandelement kann ein Halteelement aufweisen, an dem die Verschleißplatte montiert ist. Die Verschleißplatte kann beispielsweise mittels Verschraubung an dem Halteteil befestigt sein.

Nachfolgend wird die Erfindung anhand von Figuren näher erläutert, auf die sie allerdings nicht beschränkt sein soll.

Es zeigen:
Fig. 1 Teile einer Vorrichtung zum Dosieren und/oder Schleusen von Material in einem auseinandergebauten Zustand;
Fig. 2 eine Vorrichtung zum Dosieren und/oder Schleusen von Material in einer schematischen Querschnittsdarstellung;
Fig. 3 eine Vorrichtung zum Dosieren und/oder Schleusen von Material gemäß einer ersten Ausführungsvariante in einem Querschnitt;
Fig. 4 eine Dosierkammer der Vorrichtung zum Dosieren und/oder Schleusen von Material gemäß der ersten Ausführungsvariante in einem Längsschnitt;
Fig. 5 eine Vorrichtung zum Dosieren und/oder Schleusen von Material gemäß einer zweiten Ausführungsvariante in einem Querschnitt;
Fig. 5A die Vorrichtung gemäß Fig. 5 mit Verschleiß;
Fig. 6 eine Dosierkammer der Vorrichtung zum Dosieren und/oder Schleusen von Material gemäß der zweiten Ausführungsvariante in einem Längsschnitt;
Fig. 7 zeitliche Druckverläufe;
Fig. 8 ein Diagramm, das den Zusammenhang zwischen einem Verschleiß und einem Druck veranschaulicht; und
Fig. 9 eine alternative Ausgestaltung der Vorrichtung als Doppelpendelklappe

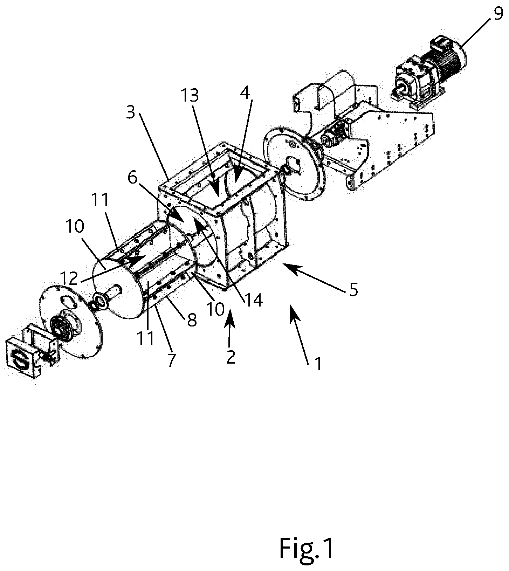

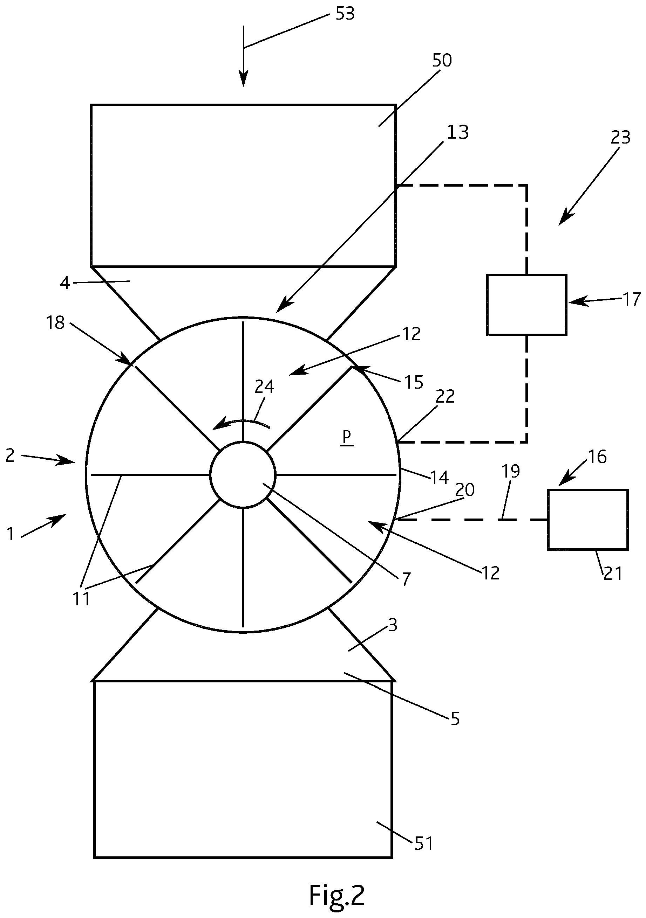

Fig. 1 zeigt eine Vorrichtung 1 zum Dosieren und/oder Schleusen von Material 53 (siehe Fig. 2) in Form einer Zellenradschleuse 2 in einem auseinandergebauten Zustand. Die Vorrichtung 1 besitzt ein feststehendes Gehäuse 3 mit einer Eingangsseite 4 zur Aufnahme von Material 53 und einer Ausgangsseite 5 zur Abgabe von dosierten Mengen des Materials 53. In dem Gehäuse 3 befindet sich ein Innenraum 6, in dem eine Dosiereinheit 7, die bei Zellenradschleusen 2 auch als Zellenrad 8 bezeichnet wird, drehbar angeordnet ist. Die Dosiereinheit 7 kann mittels eines elektrischen Antriebs 9 in Rotation versetzt werden. Die Dosiereinheit 7 besitzt zwei stirnseitig angeordnete Deckscheiben 10 und mehrere entlang des Umfangs der Dosiereinheit 7 angeordnete Wandelemente 11, die sich axial erstrecken und vom Zentrum der Dosiereinheit 7 radial abstehen. Zwischen den Wandelementen 11 wird jeweils eine Dosierkammer 12 ausgebildet. Insgesamt besitzt die Dosiereinheit 7 acht Dosierkammern 12. Die Dosierkammern 12 nehmen Material 53 an der Eingangsseite 4 auf und geben es an der Ausgangsseite 5 in dosierter Form wieder ab. Über die Eingangsseite 4 und die Ausgangsseite 5 kann die Vorrichtung 1 in eine Anlage (nicht gezeigt), beispielsweise eine Zementklinkerherstellungsanlage oder eine (Sub-)Anlage davon, wie etwa eine Filteranlage, eingefügt werden. Mit Hilfe der Vorrichtung 1 können zwei Systembereiche 50, 51 der Anlage voneinander getrennt werden (siehe Fig. 2). Die Vorrichtung 1 verhindert oder reduziert zumindest erheblich den Gas- und Wärmeaustausch zwischen den Systembereichen 50, 51.

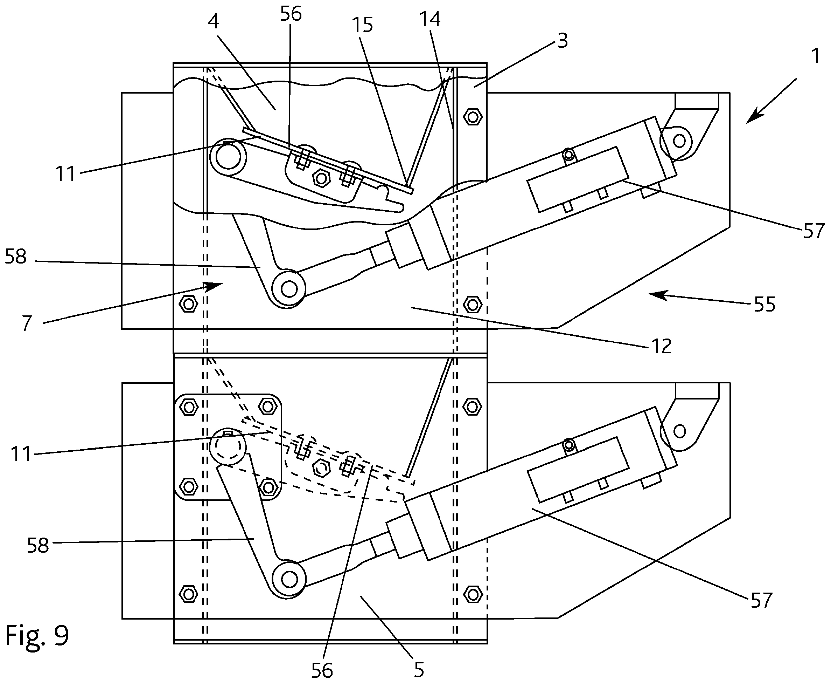

Die Vorrichtung muss nicht zwangsläufig als Zellenradschleuse 2 ausgebildet sein. Es genügt, wenn zumindest eine Dosierkammer 12 vorhanden ist. Die Vorrichtung 1 kann daher auch beispielsweise als Doppelpendelklappe (siehe Fig. 9) ausgebildet sein.

Wie bereits erwähnt nehmen die Dosierkammern 12 an der Eingangsseite 4 Material 53 auf. Das Material 53 kann durch eine Eingangsöffnung 13 in die Dosierkammern 12 gelangen. Durch Drehen der Dosiereinheit 7 werden die Dosierkammern 12 von der Eingangsseite 4 zur Ausgangsseite 5 und wieder zurück bewegt. Die Wandelemente 11 gleiten dann im Bereich zwischen der Eingangsseite 4 und der Ausgangsseite 5 entlang einer Innenwandung 14 des Gehäuses 3 und schließen dadurch die Dosierkammern 12 ab, wie dies insbesondere in Fig. 2 ersichtlich ist. Eine zwischen der Eingangsseite 4 und der Ausgangsseite 5 angeordnete Dosierkammer 12 befindet sich dann in einem vorübergehend gegenüber der Eingangsseite 4 und der Ausgangsseite 5 abgeschlossenen Zustand. In dem abgeschlossenen Zustand stehen die die Dosierkammer 12 bildenden Wandelemente 11 mit der Innenwandung 14 des Gehäuses in Berührung oder bilden, wenn kein Verschleiß vorliegt, ein geringes Spiel von bevorzugt unter 0,9 mm zu der Innenwandung aus. Eine Dosierkammer 12 in einem abgeschlossenen Zustand gleitet aufgrund der Drehung der Dosiereinheit 7 weiter und wird im Bereich der Ausgangsseite 5 wieder freigegeben. Dadurch, dass die Dosierkammern 12 während der Bewegung zwischen der Eingangsseite 4 und der Ausgangsseite 5 in dem vorübergehend abgeschlossenen Zustand liegen, wird ein Gas- und Wärmeaustausch zwischen der Eingangsseite 4 und der Ausgangsseite 5 reduziert, wodurch, wie oben beschrieben, zwei Systembereiche 50, 51 einer Anlage voneinander getrennt werden können. Darüber hinaus dient die Vorrichtung 1 somit als Explosionsschutz.

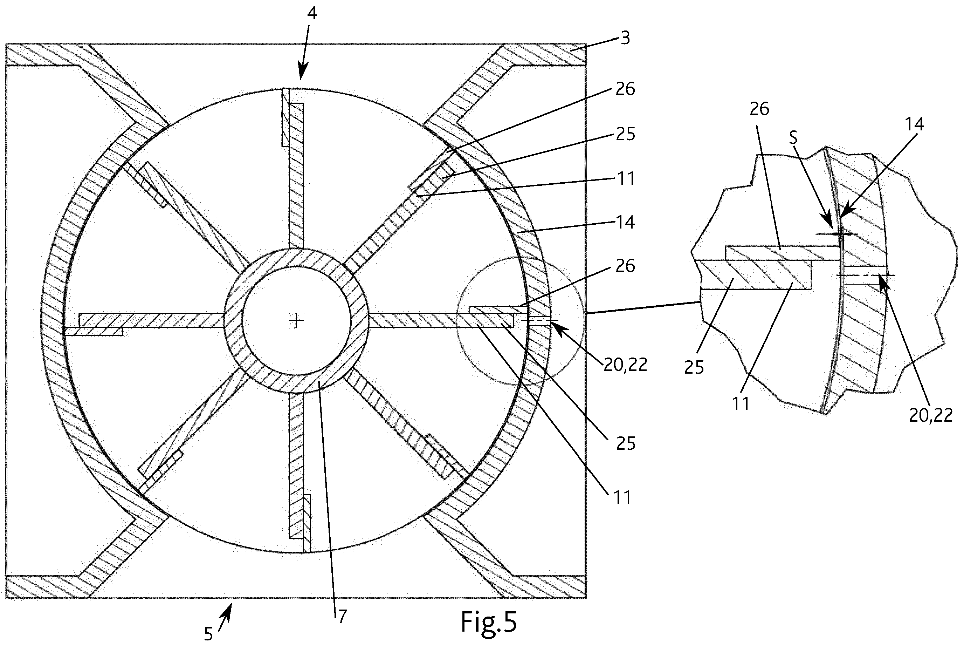

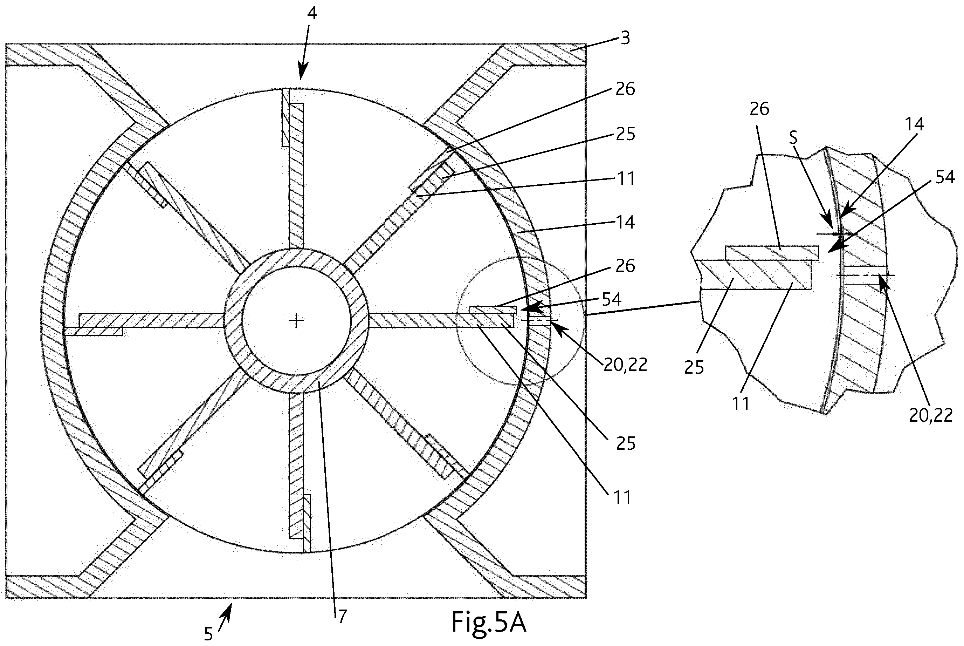

Aufgrund der Bewegung der Dosiereinheit 7 kann es zu Abnutzungen bzw. Verschleiß 54 (siehe Fig. 5A) kommen, der den Gas- und Wärmeaustausch zwischen der Eingangsseite 4 und der Ausgangsseite 5 erhöht. Der Verschleiß 54 tritt hauptsächlich an den radial äußeren Randbereichen 15 der Wandelemente 11 auf, weil dort eine Reibung der Wandelemente 11 mit der Innenwandung 14 auftritt, insbesondere wenn dort Material 53 zwischen den Wandelementen 11 und der Innenwandung 14 eingeklemmt wird. Des Weiteren kann es aufgrund von Korrosion an der Dosiereinheit 7 zu einem erhöhten Spiel und dadurch ebenfalls zu einem erhöhten Gas- und Wärmeaustausch zwischen der Eingangsseite 4 und der Ausgangsseite 5 kommen. Sogenannte Anbackungen, also unerwünschte, anhaftende Materialanhäufungen in den Dosierkammern 12, können wiederum den Materialdurchsatz reduzieren.

Um den Zustand der Vorrichtung 1 insbesondere hinsichtlich des Verschleißes 54, der Korrosion und der Anbackungen zu überwachen, ist erfindungsgemäß vorgesehen, dass mit Hilfe einer Druckerzeugungseinheit 16 ein Fluid, vorzugsweise ein Gas, insbesondere Druckluft, unter Druck in die vorbeibewegten Dosierkammern 12 in dem jeweils abgeschlossenen Zustand eingebracht wird und der Druck P innerhalb der Dosierkammern 12 mit Hilfe einer Druckmesseinheit 17 gemessen wird. Die Druckerzeugungseinheit 16 kann beispielsweise eine Pumpvorrichtung oder eine Fluidspeichervorrichtung aufweisen. Da das Fluid bei größer werdendem Verschleiß 54 oder Korrosion an den Wandelementen 11, insbesondere an deren radial außenliegenden Randbereichen 15 der Wandelemente 11, und dem damit einhergehenden Spiel 18 aus den Dosierkammern 12 im abgeschlossenen Zustand leichter entweichen kann, stellt der gemessene Druck P innerhalb der Dosierkammern 12 ein Maß für den Verschleiß 54 oder die Korrosion der Dosierkammern 12 dar. Je größer der Verschleiß oder die Korrosion an den Randbereichen 15 der Wandelemente 11 ist, desto größer ist das Spiel 18 zwischen den Wandelementen 11 und der Innenwandung 14 und desto mehr Fluid kann aus den Dosierkammern 12 im abgeschlossenen Zustand entweichen. Je größer daher der Verschleiß 54 oder die Korrosion ist, desto weniger Druck P baut sich innerhalb der Dosierkammern 12 im abgeschlossenen Zustand auf. Umgekehrt baut sich mehr Druck P in den Dosierkammern 12 auf, wenn Anbackungen, also unerwünschte anhaftende Materialanhäufungen, die nur durch zusätzliche mechanische Einwirkung entfernt werden können, vorliegen.

In der gezeigten Darstellung gemäß Fig. 2 wird das Fluid über eine Druckleitung 19 an einen Einlass 20 an der Innenwandung 14 des Gehäuses 3 geleitet. Der Einlass 20 ist vorzugsweise bündig mit der Innenwandung 14 ausgeführt oder radial nach innen in die Innenwandung 14 versetzt, sodass der Einlass 20 nicht in die Dosierkammern 12 ragt. Über den Einlass 20 wird das Fluid in die vorbeibewegten Dosierkammern 12 geleitet. Die Druckversorgung 21 und damit der Druck in der Druckleitung 19 kann beispielsweise zwischen 2 und 6 bar betragen. Der Druck P, der in den abgeschlossenen Dosierkammern 12 aufgebaut wird, liegt typischerweise etwas unter dem Druck der Druckversorgung 21. Die Druckerzeugungseinheit 16 kann ein Ventil (nicht gezeigt) aufweisen, um die Einleitung des Fluids zu beginnen oder zu beenden. Um den Druck P innerhalb einer Dosierkammer 12 zu messen, weist die Druckmesseinheit 17 einen Messfühler 22 an der Innenwandung 14 auf. Der Messfühler 22 ist vorzugsweise bündig mit der Innenwandung 14 ausgeführt oder radial nach innen in die Innenwandung 14 versetzt, sodass der Messfühler 22 nicht in die Dosierkammern 12 ragt.

In Fig. 2 ist schematisch dargestellt, dass als Druck P ein Differenzdruck zwischen der Dosierkammer 12 im abgeschlossenen Zustand und dem mit der Eingangsseite 4 verbundenen Systembereich 50 der Anlage gemessen wird. Alternativ kann auch vorgesehen sein, dass als Druck P ein Differenzdruck zwischen der Dosierkammer 12 im abgeschlossenen Zustand und der Umgebung 23 außerhalb der Vorrichtung 1 und der Anlage gemessen wird. Der Druck in der Umgebung 23 liegt bei etwa 1 bar.

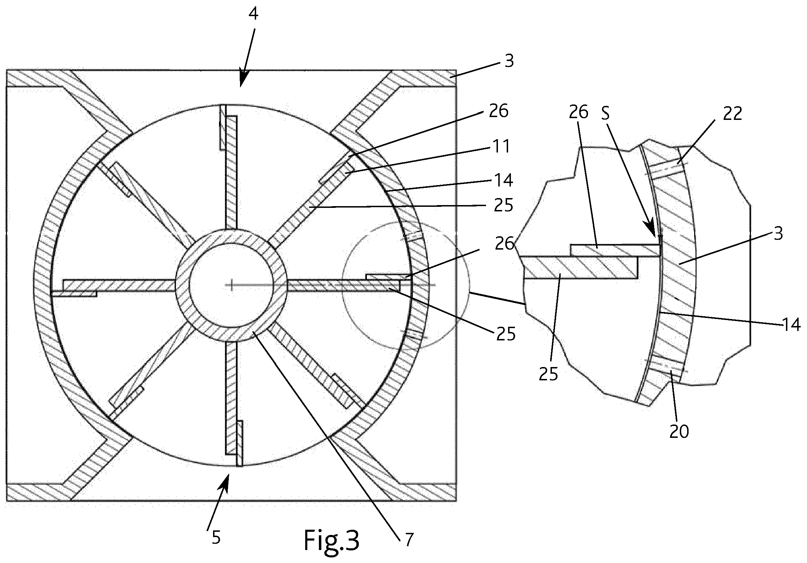

In Fig. 2 ist ersichtlich, dass der Messfühler 22 in eine Bewegungsrichtung 24 der Dosiereinheit 7 gesehen versetzt zu dem Einlass 20 angeordnet ist. In der gezeigten Anordnung ist daher der Messfühler 22 in vertikale Richtung gesehen oberhalb des Einlasses 20 angeordnet. Dies ist auch in Fig. 3 ersichtlich. Auf diese Weise ist es möglich, das Fluid bereits in eine Dosierkammer 12 einzuleiten, bevor der Druck in der Dosierkammer 12 gemessen wird. Das Fluid hat dadurch länger Zeit zu entweichen, wodurch Verschleiß 54, Korrosion oder Anbackungen besser festgestellt werden kann.

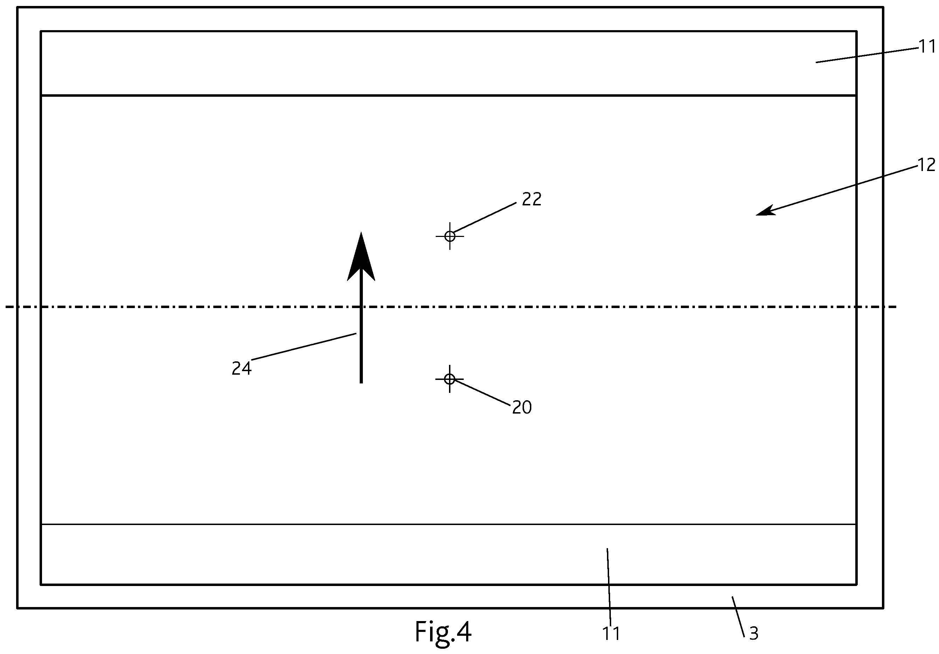

Fig. 4 zeigt einen schematischen Längsschnitt einer Vorrichtung 1. Erkennbar ist ebenfalls, dass der Messfühler 22 in eine Bewegungsrichtung 24 der Dosiereinheit 7 gesehen versetzt zu dem Einlass 20 angeordnet ist. Der Messfühler 22 liegt oberhalb des Einlasses 20.

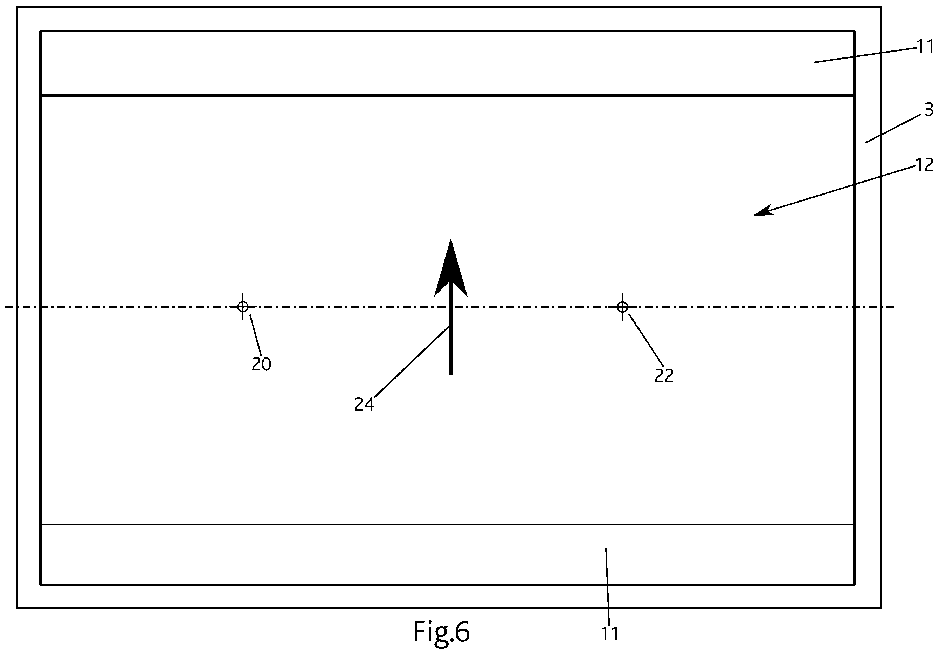

Bei einer alternativen Ausführungsform der Erfindung sind der Einlass 20 und der Messfühler 22 in einer gemeinsamen Ebene quer zur Bewegungsrichtung 24 der Dosiereinheit 7 angeordnet. Dies ist in den Figuren Fig. 5 und Fig. 6 dargestellt. In den gezeigten Darstellungen sind der Einlass 20 und der Messfühler 22 auf einer gemeinsamen horizontalen Ebene angeordnet. Durch die Anordnung auf einer gemeinsamen horizontalen Ebene kann gleichzeitig das Fluid über den Einlass 20 in die Dosierkammern 12 eingebracht und mithilfe des Messfühlers 22 gemessen werden. Dies ist auch rechts in Fig. 5 gezeigt, in welcher der Einlass 20 und der Messfühler 22 in der Querschnittsdarstellung optisch zusammenfallen, allerdings so wie in Fig. 6 versetzt zueinander angeordnet sind.

In Fig. 3 und Fig. 5 sind die Wandelemente 11 der Dosiereinheit 7 näher dargestellt. Jedes Wandelement 11 weist ein Halteteil 25 und an einem radial äußeren Randbereich 15 eine auswechselbare Verschleißplatte 26 auf. Die Verschleißplatten 26 sind jeweils lösbar an den Halteteilen 25 befestigt, beispielsweise durch Verschraubung. Durch die Verschleißplatten 26 muss nicht das gesamte jeweilige Wandelement 11 ausgewechselt werden, sondern es genügt, die von Verschleiß 54 und Korrosion betroffenen Verschleißplatten 26 zu tauschen.

In Fig. 3 und Fig. 5 ist jeweils rechts ein Ausschnitt eines einzelnen Wandelements 22 dargestellt. Zwischen dem Wandelement 11, insbesondere der Verschleißlatte 26, und der Innenwandung 14 ist ein Spalt S, auch als Spiel bezeichnet, dargestellt. Wenn kein Verschleiß 54, keine Korrosion und keine Anbackung vorliegt, berührt die Verschleißplatte 26 die Innenwandung 14 im abgeschlossenen Zustand der Dosierkammer 12 oder der Spalt S beträgt in der gezeigten Darstellung höchstens 0,7 mm. Wenn ein Verschleiß 54 oder Korrosion vorliegt, beträgt der vergrößerte Spalt S beispielsweise 1,2 mm und bietet dem Fluid in der Dosierkammer 12 eine Möglichkeit, vermehrt zu entweichen. Je größer der Spalt S ist, desto mehr Fluid kann entweichen und desto niedriger ist der in der Dosierkammer 12 durch die Druckerzeugungseinheit 16 aufgebaute Druck P. Wenn der Druck P im Vergleich zu einer unverschlissenen/unkorrodierten Dosierkammer 12 erhöht ist, kann dies ein Hinweis auf Anbackungen sein. Der mittels der Druckmesseinheit 17 gemessene Druck P innerhalb einer Dosierkammer 12 ist daher ein Maß für die Größe des Spaltes S und damit für den Verschleiß 54 und die Korrosion.

Fig. 5A zeigt die Darstellung gemäß Fig. 5, wobei an einer Stelle eines Wandelements 22, genauer an einer Verschleißplatte 26, Verschleiß 54 vorliegt.

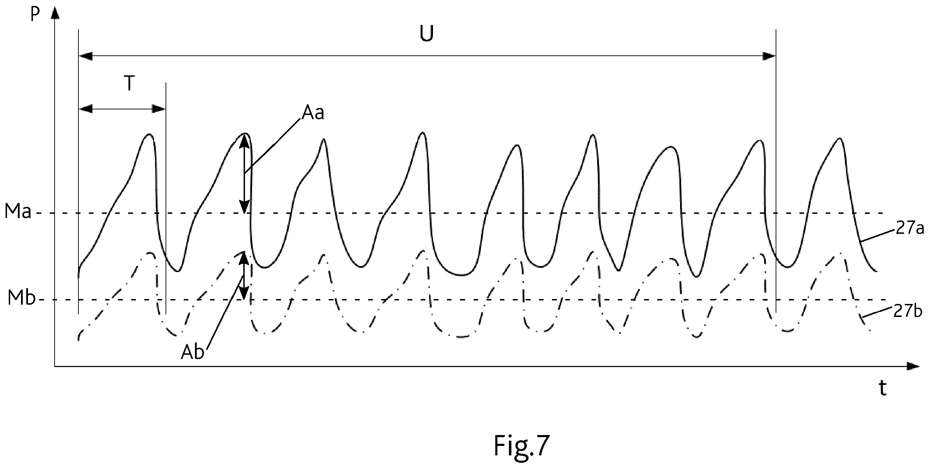

Fig. 7 zeigt zwei schematische zeitliche Druckverläufe 27a, 27b während des Betriebs der Vorrichtung 1. Der Druckverlauf 27a stammt von einer Vorrichtung 1, bei der die Wandelemente 11, insbesondere die Verschleißplatten 26, nur wenig oder gar nicht verschlissen bzw. korrodiert sind. Der Druckverlauf 27b stammt von einer Vorrichtung 1, bei der die Wandelemente 11, insbesondere die Verschleißplatten 26, stärker verschlissen sind, als dies bei dem Druckverlauf 27a der Fall ist. Auf der Abszisse des Diagramms ist die Zeit t aufgetragen. Die Ordinate gibt den Druck P innerhalb der Dosierkammern 12 im jeweils abgeschlossenen Zustand wieder. Die Vorrichtungen 1, bei denen die Verläufe 27a, b aufgenommen wurden, besitzen acht Dosierkammern 12. Das Fluid wurde zeitlich konstant, d.h. ohne Unterbrechung, über einen Zeitraum von beispielsweise 2 Minuten (dargestellt ist in Fig. 7 nur ein Teil davon) und mit im Wesentlichen konstantem Druck in die Dosierkammern 12 im abgeschlossenen Zustand eingebracht. Die Druckverläufe 27a, b wurden mithilfe des Messfühlers 22 aufgenommen. Die Markierung U umfasst acht (Grund-) Perioden T der Druckverläufe 27a, b. Jede Periode T zeigt den Druckverlauf einer Dosierkammer 12 im abgeschlossenen Zustand, wenn sie sich an dem Einlass 20 und dem Messfühler 22 vorbeibewegt. Erkennbar ist, dass der Mittelwert Mₐ des Druckverlaufs 27a höher ist als der Mittelwert M_{b} des Druckverlaufs 27b. Außerdem ist die Amplitude Aₐ höher als die Amplitude A_{b} des Druckverlaufs 27b. Dies ist auf den Spalt S bzw. den Verschleiß 54/die Korrosion der Wandelemente 11 zurückzuführen. Je größer der Verschleiß 54/die Korrosion ist, desto mehr Fluid kann aus der Dosierkammer 12 im abgeschlossenen Zustand entweichen und desto weniger Druck P kann sich innerhalb einer Dosierkammer 12 im abgeschlossenen Zustand aufbauen. Der Druck P ist daher ein Maß für den Verschleiß/die Korrosion der Dosierkammern 12, insbesondere der Wandelemente 11.

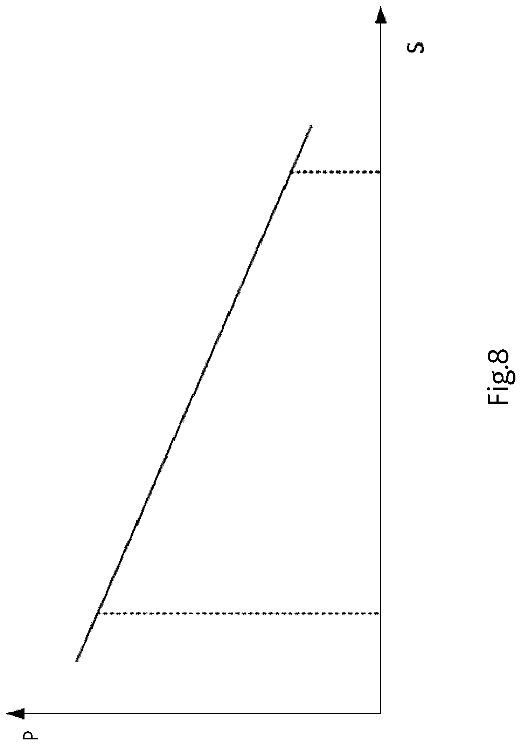

Fig. 8 veranschaulicht den Zusammenhang zwischen dem Druck P und dem Verschleiß 54 bzw. Spalt S schematisch. In Fig. 8 ist ein Diagramm dargestellt, bei dem auf der Abszisse die Größe des Spaltes S und auf der Ordinate der Druck P aufgetragen ist. Je größer der Spalt S ist, desto geringer ist der in der Dosierkammer aufgebaute Druck P. Wenn der Druck hoch ist, kann dies ein Hinweis auf Anbackungen sein.

Fig. 9 zeigt eine erfindungsgemäße Vorrichtung 1 in Form einer Doppelpendelklappe 55 in einer seitlichen Ansicht, die teilweise einen Querschnitt der Vorrichtung 1 zeigt (siehe die gestrichelten Linien im unteren Bereich). Material wird von einer Eingangsseite 4 zu einer Ausgangsseite 5 befördert und dort in dosierten Mengen abgegeben. Eine Doppelpendelklappe 55 besitzt zwei Klappen 56, die nacheinander geöffnet und geschlossen werden, um einen Gasaustausch von der Eingangs- 4 zur Ausgangsseite 5 und vice versa zu vermeiden. Mit anderen Worten befindet sich immer nur eine der Klappen 56 in einem geöffneten Zustand. Die obere Klappe 56 kann auslösen, wenn ein bestimmtes Gewicht auf ihr lastet. Die Doppelpendelklappe 55 kann mechanisch, elektrisch, hydraulisch und/oder pneumatisch aktuiert werden. In der gezeigten Darstellung sind zwei Pneumatikzylinder 57 vorgesehen. Die Bewegung der Pneumatikzylinder 57 wird über eine Gelenkmechanik 58 umgesetzt, sodass die Klappen 56 bewegt werden können. Die Klappen 56 stellen jeweils Wandelemente 11 einer Dosiereinheit 7 dar, die eine Dosierkammer 12 begrenzen. Material 53 wird von der Eingangsseite 4 durch die obere Klappe 56 in die Dosierkammer 12 befördert und von dort, nachdem die obere Klappe 56 geschlossen ist, von der unteren Klappe 56 in Richtung Ausgangsseite 5 befördert.

## Patentansprüche

1. Verfahren zur Überwachung eines Zustandes, insbesondere eines Verschleiß- und/oder Korrosionszustandes, bei einer Vorrichtung (1) zum Dosieren und/oder Schleusen von Material (53), insbesondere einer Zellenradschleuse (2), wobei die Vorrichtung (1) ein feststehendes Gehäuse (3) mit einer Eingangsseite (4) zum Zuführen des Materials (53) und einer Ausgangsseite (5) zum Ausgeben von dosierten Mengen des Materials (53) sowie eine vorzugsweise bewegliche Dosiereinheit (7) mit einer Dosierkammer (12) besitzt und das Verfahren folgende Schritte aufweist:
i) Überführen der Dosierkammer (12) in einen gegenüber der Eingangsseite (4) und der Ausgangsseite (5) vorübergehend abgeschlossenen Zustand, wobei die Dosierkammer (12) durch zumindest ein Wandelement (11) der Dosiereinheit (7) begrenzt wird und in dem vorübergehend abgeschlossenen Zustand vorzugsweise durch eine Innenwandung (14) des Gehäuses (3) abgeschlossen wird;
ii) Einleiten eines Fluids, insbesondere eines Gases, in die im abgeschlossenen Zustand befindliche Dosierkammer (12) mit Hilfe einer Druckerzeugungseinheit (16), um den Druck (P) in der Dosierkammer (12) zu erhöhen;
iii) Messen des Drucks (P) in der Dosierkammer (12) mit einer Druckmesseinheit (17); und
iv) Bestimmen des Zustandes der Vorrichtung auf Basis des gemessenen Drucks (P), insbesondere auf Basis eines Druckverlaufs (27a, 27b).

2. Verfahren nach Anspruch 1, **dadurch gekennzeichnet, dass** die Dosierkammer (12) zwischen der Eingangsseite (4) und der Ausgangsseite (5) bewegt wird.

3. Verfahren nach Anspruch 1 oder 2, **dadurch gekennzeichnet, dass** das Fluid in die Dosierkammer (12) eingeleitet und der Druck (P) gemessen wird, wenn die Dosierkammer (12) im Wesentlichen frei von Material (53) ist.

4. Verfahren nach Anspruch 2 oder 3, **dadurch gekennzeichnet, dass** das Fluid in die Dosierkammer (12) eingeleitet und der Druck (P) gemessen wird, während die Dosierkammer (12) von der Ausgangsseite (5) in Richtung der Eingangsseite (4) bewegt wird.

5. Verfahren nach einem der Ansprüche 1 bis 4, **dadurch gekennzeichnet, dass** das Fluid in mehreren Impulsen oder mit einem einzigen Einlassstoß in die Dosierkammer (12) eingeleitet wird.

6. Verfahren nach einem der Ansprüche 1 bis 5, **dadurch gekennzeichnet, dass** die Dosiereinheit (7) ein Zellenrad (8) ist, an welchem mehrere Wandelemente (11) angeordnet sind.

7. Verfahren nach einem der Ansprüche 1 bis 6, **dadurch gekennzeichnet, dass** der Druck (P) ein Differenzdruck zwischen einem Innenraum der Dosierkammer (12) und der Umgebung (23) außerhalb der Vorrichtung ist.

8. Verfahren nach einem der Ansprüche 1 bis 7, **dadurch gekennzeichnet, dass** der Druck (P) ein Differenzdruck zwischen einem Innenraum der Dosierkammer (12) und einem an die Eingangsseite (4) oder an die Ausgangsseite (5) angeschlossenen Systembereich (50, 51) einer Anlage ist.

9. Verfahren nach einem der Ansprüche 1 bis 8, **dadurch gekennzeichnet, dass** das Fluid über einen an einer Innenwandung (14) des Gehäuses (3) angeordneten Einlass (20) der Druckerzeugungseinheit (16) in die Dosierkammer (12) eingebracht wird.

10. Verfahren nach einem der Ansprüche 1 bis 9, **dadurch gekennzeichnet, dass** der Druck (P) in der Dosierkammer (12) mit einem an einer Innenwandung (14) des Gehäuses (3) angeordneten Messfühler (22) der Druckmesseinheit (17) gemessen wird.

11. Verfahren nach den Ansprüchen 9 und 10, **dadurch gekennzeichnet, dass** der Einlass (20) und der Messfühler (22) auf einer gemeinsamen Ebene quer zu einer Bewegungsrichtung (24) der Dosierkammer oder in Richtung der Bewegungsrichtung (24) versetzt zueinander angeordnet sind.

12. Verfahren nach einem der Ansprüche 1 bis 11, **dadurch gekennzeichnet, dass** die Druckerzeugungseinheit (16) einen Versorgungsdruck zwischen 1,5 bar und 7 bar, bevorzugt zwischen 2 bar und 6 bar, aufweist.

13. Reparaturverfahren zum Reparieren einer Vorrichtung (1) zum Dosieren und/oder Schleusen von Material (53), insbesondere einer Zellenradschleuse (2), wobei die Vorrichtung (1) ein feststehendes Gehäuse (3) mit einer Eingangsseite (4) zum Zuführen des Materials (53) und einer Ausgangsseite (5) zum Ausgeben von dosierten Mengen des Materials (53) sowie eine vorzugsweise bewegliche Dosiereinheit (7) mit einer Dosierkammer (12) besitzt, wobei die Dosiereinheit (7) zumindest ein Wandelement (11) besitzt und das Verfahren folgende Schritte aufweist:
a) Ausführen eines Verfahrens zur Überwachung eines Zustandes nach einem der Ansprüche 1 bis 12; und
b) Auswechseln oder Reparieren des zumindest einen Wandelements (11), wenn der Zustand von einem Sollzustand abweicht, insbesondere wenn ein Verschleiß und/oder eine Korrosion ein vorgegebenes Maß übersteigt; und/oder
c) Entfernen von Anbackungen, wenn der Zustand von einem Sollzustand abweicht, insbesondere wenn die Menge von Anbackungen ein vorgegebenes Maß übersteigt.

14. Vorrichtung (1) zum Dosieren und/oder Schleusen von Material (53), insbesondere eine Zellenradschleuse (2), aufweisend:
ein feststehendes Gehäuse (3) mit einer Eingangsseite (4) zum Zuführen des Materials (53) und einer Ausgangsseite (5) zum Ausgeben von dosierten Mengen des Materials (53);
eine vorzugsweise bewegliche Dosiereinheit (7) mit einer Dosierkammer (12), mit der Material (53) von der Eingangsseite (4) aufgenommen und in dosierter Menge an der Ausgangsseite (5) abgegeben werden kann, wobei die Dosierkammer (12) in einen gegenüber der Eingangsseite (4) und der Ausgangsseite (5) vorübergehend abgeschlossenen Zustand überführbar ist, wobei die Dosierkammer (12) durch zumindest ein Wandelement (11) der Dosiereinheit (7) begrenzt ist und die Dosierkammer (12) im vorübergehend abgeschlossenen Zustand vorzugsweise durch eine Innenwandung (14) des Gehäuses (3) abgeschlossen ist; und
eine Antriebseinheit (9), die mit der Dosiereinheit (7) mechanisch verbunden ist, um die Dosiereinheit (7) in Bewegung zu versetzen;
**gekennzeichnet durch**
eine Druckerzeugungseinheit (16), die dazu eingerichtet ist, einen Druck (P) in der abgeschlossenen Dosierkammer (12) zu erzeugen, und
eine Druckmesseinheit (17) zum Messen des Drucks (P) innerhalb der Dosierkammer (12), um einen Zustand, insbesondere einen Verschleiß- und/oder einen Korrosionszustand, der Vorrichtung (1) festzustellen.

15. Vorrichtung nach Anspruch 14, **dadurch gekennzeichnet, dass** das zumindest eine Wandelement (11) an einem im Betrieb einer Innenwandung (14) des Gehäuses (3) zugewandten Randbereich (15) eine lösbar befestigte Verschleißplatte (26) aufweist.

## Claims

1. Method for monitoring a condition, in particular a wear and/ or corrosion condition, of a device (1) for dosing and/or sluicing material (53), in particular a rotary cell feeder (2), wherein the device (1) comprises a stationary housing (3) with an input side (4) for supplying the material (53) and an output side (5) for dispensing metered quantities of the material (53), as well as a preferably movable dosing unit (7) with a dosing chamber (12), and the method comprises the following steps:
i) transferring the dosing chamber (12) into a state temporarily closed relative to the input side (4) and the output side (5), wherein the dosing chamber (12) is delimited by at least one wall element (11) of the dosing unit (7) and, in the temporarily closed state, is preferably closed by an inner wall (14) of the housing (3);
ii) introducing a fluid, in particular a gas, into the dosing chamber (12) in the closed state by means of a pressure generation unit (16) in order to increase the pressure (P) in the dosing chamber (12);
iii) measuring the pressure (P) in the dosing chamber (12) with a pressure measuring unit (17); and
iv) determining the condition of the device on the basis of the measured pressure (P), in particular on the basis of a pressure profile (27a, 27b).

2. Method according to claim 1, **characterized in that** the dosing chamber (12) is moved between the input side (4) and the output side (5).

3. Method according to claim 1 or 2, **characterized in that** the fluid is introduced into the dosing chamber (12) and the pressure (P) is measured when the dosing chamber (12) is essentially free of material (53).

4. Method according to claim 2 or 3, **characterized in that** the fluid is introduced into the dosing chamber (12) and the pressure (P) is measured while the dosing chamber (12) is moved from the output side (5) in the direction of the input side (4).

5. Method according to one of claims 1 to 4, **characterized in that** the fluid is introduced into the dosing chamber (12) in several pulses or with a single inlet surge.

6. Method according to one of claims 1 to 5, **characterized in that** the dosing unit (7) is a rotary cell wheel (8) on which a plurality of wall elements (11) are arranged.

7. Method according to one of claims 1 to 6, **characterized in that** the pressure (P) is a differential pressure between an interior space of the dosing chamber (12) and the environment (23) outside the device.

8. Method according to one of claims 1 to 7, **characterized in that** the pressure (P) is a differential pressure between an interior space of the dosing chamber (12) and a system region (50, 51) of an installation connected to the input side (4) or to the output side (5).

9. Method according to one of claims 1 to 8, **characterized in that** the fluid is introduced into the dosing chamber (12) via an inlet (20) of the pressure generation unit (16) arranged on an inner wall (14) of the housing (3).

10. Method according to one of claims 1 to 9, **characterized in that** the pressure (P) in the dosing chamber (12) is measured with a sensor (22) of the pressure measuring unit (17) arranged on an inner wall (14) of the housing (3).

11. Method according to claims 9 and 10, **characterized in that** the inlet (20) and the sensor (22) are arranged on a common plane transverse to a direction of movement (24) of the dosing chamber or offset from one another in the direction of movement (24).

12. Method according to one of claims 1 to 11, **characterized in that** the pressure generation unit (16) comprises a supply pressure between 1.5 bar and 7 bar, preferably between 2 bar and 6 bar.

13. Repair method for repairing a device (1) for dosing and/or sluicing material (53), in particular a rotary cell feeder (2), wherein the device (1) comprises a stationary housing (3) with an input side (4) for supplying the material (53) and an output side (5) for dispensing metered quantities of the material (53), as well as a preferably movable dosing unit (7) with a dosing chamber (12), wherein the dosing unit (7) comprises at least one wall element (11), and the method comprises the following steps:
a) carrying out a method for monitoring a condition according to one of claims 1 to 12; and
b) replacing or repairing the at least one wall element (11) if the condition deviates from a target condition, in particular if wear and/or corrosion exceeds a predefined extent; and/or
c) removing deposits if the condition deviates from a target condition, in particular if the amount of deposits exceeds a predefined extent.

14. Device (1) for dosing and/or sluicing material (53), in particular a rotary cell feeder (2), comprising:
a stationary housing (3) with an input side (4) for supplying the material (53) and an output side (5) for dispensing metered quantities of the material (53);
a preferably movable dosing unit (7) with a dosing chamber (12), with which material (53) can be taken up from the input side (4) and dispensed in metered quantity at the output side (5), wherein the dosing chamber (12) can be transferred into a state temporarily closed relative to the input side (4) and the output side (5), wherein the dosing chamber (12) is delimited by at least one wall element (11) of the dosing unit (7) and the dosing chamber (12), in the temporarily closed state, is preferably closed by an inner wall (14) of the housing (3); and
a drive unit (9), which is mechanically connected to the dosing unit (7) in order to set the dosing unit (7) in motion;
**characterized by**
a pressure generation unit (16), which is configured to generate a pressure (P) in the closed dosing chamber (12), and
a pressure measuring unit (17) for measuring the pressure (P) within the dosing chamber (12) in order to determine a condition, in particular a wear and/or corrosion condition, of the device (1).

15. Device according to claim 14, **characterized in that** the at least one wall element (11) comprises a removably fastened wear plate (26) at an edge region (15) which, during operation, faces an inner wall (14) of the housing (3).

## Revendications

1. Procédé de surveillance d'un état, en particulier d'un état d'usure et/ou de corrosion, d'un dispositif (1) pour le dosage et/ou le transfert d'un matériau (53), en particulier d'une écluse à roue cellulaire (2), ledit dispositif (1) comprenant un boîtier fixe (3) avec un côté entrée (4) pour l'alimentation en matériau (53) et un côté sortie (5) pour la délivrance de quantités dosées de matériau (53), ainsi qu'une unité de dosage mobile (7) avec une chambre de dosage (12), ledit procédé comprenant les étapes suivantes:
i) amener la chambre de dosage (12) dans un état temporairement fermé par rapport au côté entrée (4) et au côté sortie (5), la chambre de dosage (12) étant délimitée par au moins un élément de paroi (11) de l'unité de dosage (7) et étant de préférence fermée dans ledit état temporairement fermé par une paroi interne (14) du boîtier (3) ;
ii) introduire un fluide, en particulier un gaz, dans la chambre de dosage (12) située dans l'état fermé, à l'aide d'une unité de génération de pression (16), afin d'augmenter la pression (P) dans la chambre de dosage (12) ;
iii) mesurer la pression (P) dans la chambre de dosage (12) à l'aide d'une unité de mesure de pression (17) ; et
iv) déterminer l'état du dispositif sur la base de la pression (P) mesurée, en particulier sur la base d'un profil de pression (27a, 27b).

2. Procédé selon la revendication 1, **caractérisé en ce que** la chambre de dosage (12) est déplacée entre le côté entrée (4) et le côté sortie (5).

3. Procédé selon la revendication 1 ou 2, **caractérisé en ce que** le fluide est introduit dans la chambre de dosage (12) et la pression (P) est mesurée lorsque la chambre de dosage (12) est essentiellement exempte de matériau (53).

4. Procédé selon la revendication 2 ou 3, **caractérisé en ce que** le fluide est introduit dans la chambre de dosage (12) et la pression (P) est mesurée pendant que la chambre de dosage (12) est déplacée du côté sortie (5) vers le côté entrée (4).

5. Procédé selon l'une quelconque des revendications 1 à 4, **caractérisé en ce que** le fluide est introduit dans la chambre de dosage (12) en plusieurs impulsions ou par une seule entrée en rafale.

6. Procédé selon l'une quelconque des revendications 1 à 5, **caractérisé en ce que** l'unité de dosage (7) est une roue cellulaire (8) sur laquelle sont disposés plusieurs éléments de paroi (11).

7. Procédé selon l'une quelconque des revendications 1 à 6, **caractérisé en ce que** la pression (P) est une pression différentielle entre l'intérieur de la chambre de dosage (12) et l'environnement (23) à l'extérieur du dispositif.

8. Procédé selon l'une quelconque des revendications 1 à 7, **caractérisé en ce que** la pression (P) est une pression différentielle entre l'intérieur de la chambre de dosage (12) et une zone de système (50, 51) d'une installation connectée au côté entrée (4) ou au côté sortie (5).

9. Procédé selon l'une quelconque des revendications 1 à 8, **caractérisé en ce que** le fluide est introduit dans la chambre de dosage (12) via une entrée (20) de l'unité de génération de pression (16) disposée sur une paroi interne (14) du boîtier (3).

10. Procédé selon l'une quelconque des revendications 1 à 9, **caractérisé en ce que** la pression (P) dans la chambre de dosage (12) est mesurée à l'aide d'un capteur (22) de l'unité de mesure de pression (17) disposé sur une paroi interne (14) du boîtier (3).

11. Procédé selon les revendications 9 et 10, **caractérisé en ce que** l'entrée (20) et le capteur (22) sont disposés sur un plan commun perpendiculaire à une direction de déplacement (24) de la chambre de dosage ou décalés l'un par rapport à l'autre dans la direction de déplacement (24).

12. Procédé selon l'une quelconque des revendications 1 à 11, **caractérisé en ce que** l'unité de génération de pression (16) a une pression d'alimentation comprise entre 1,5 bar et 7 bar, de préférence entre 2 bar et 6 bar.

13. Procédé de réparation pour réparer un dispositif (1) pour le dosage et/ou le transfert d'un matériau (53), en particulier une écluse à roue cellulaire(2), ledit dispositif (1) comprenant un boîtier fixe (3) avec un côté entrée (4) pour l'alimentation en matériau (53) et un côté sortie (5) pour la délivrance de quantités dosées de matériau (53), ainsi qu'une unité de dosage mobile (7) avec une chambre de dosage (12), ladite unité de dosage (7) comprenant au moins un élément de paroi (11), ledit procédé comprenant les étapes suivantes :
a) exécuter un procédé de surveillance d'un état selon l'une quelconque des revendications 1 à 12 ; et
b) remplacer ou réparer ledit au moins un élément de paroi (11) si l'état s'écarte d'un état cible, en particulier si une usure et/ou une corrosion dépassent une mesure prédéfinie ; et/ ou
c) éliminer les dépôts si l'état s'écarte d'un état cible, en particulier si la quantité de dépôts dépasse une mesure prédéfinie.

14. Dispositif (1) pour le dosage et/ou le transfert d'un matériau (53), en particulier une écluse à roue cellulaire (2), comprenant :
un boîtier fixe (3) avec un côté entrée (4) pour l'alimentation en matériau (53) et un côté sortie (5) pour la délivrance de quantités dosées de matériau (53) ;
une unité de dosage mobile (7) avec une chambre de dosage (12) avec laquelle le matériau (53) peut être prélevé du côté entrée (4) et délivré en quantité dosée au niveau du côté sortie (5), la chambre de dosage (12) pouvant être amenée dans un état temporairement fermé par rapport au côté entrée (4) et au côté sortie (5), la chambre de dosage (12) étant délimitée par au moins un élément de paroi (11) de l'unité de dosage (7) et la chambre de dosage (12) étant de préférence fermée dans ledit état temporairement fermé par une paroi interne (14) du boîtier (3) ; et
une unité d'entraînement (9) mécaniquement connectée à l'unité de dosage (7) pour déplacer l'unité de dosage (7) ; **caractérisé par**
une unité de génération de pression (16) configurée pour générer une pression (P) dans la chambre de dosage (12) fermée, et
une unité de mesure de pression (17) pour mesurer la pression (P) à l'intérieur de la chambre de dosage (12) afin de déterminer un état, en particulier un état d'usure et/ou de corrosion, du dispositif (1).

15. Dispositif selon la revendication 14, **caractérisé en ce que** ledit au moins un élément de paroi (11) comprend une plaque d'usure (26) fixée de manière amovible sur une zone de bord (15) qui est en contact avec une paroi interne (14) du boîtier (3) en fonctionnement.
